# EUROPEAN PATENT APPLICATION

(11) **EP 4 343 718 A1**
(43) Date of publication of application: **27.03.2024**
(21) Application number: 23192882.1
(22) Date of filing: 23.08.2023
(51) Int. Cl.: G06V 20/40, G06V 20/52

(54) **AN IMAGE SENSOR DEVICE, METHOD AND COMPUTER PROGRAM**

(30) Priority: 23.09.2022 GB 202213916
(71) Applicant: Sony Semiconductor Solutions Corporation, Atsugi-shi, Kanagawa 243-0014 (JP)
(72) Inventor: FINATTI, Salvatore, Basingstoke, RG22 4SB (GB); AVITABILE, Antonio, Basingstoke, RG22 4SB (GB)
(74) Representative: D Young & Co LLP

(57) **Abstract**

The present disclosure relates to an image sensor device comprising circuitry configured to: receive an image; run a first neural network configured to detect one or more regions of interest in the image; and run a second neural network configured to determine, based on the image, whether a predetermined event has occurred; wherein when it is determined that the predetermined event has occurred, the image is output; and the circuitry is further configured such that the first neural network initiates obscuring processing to produce an obscured image in which the one or more regions of interest are obscured and the circuitry is configured to output the obscured image when it is determined that the predetermined event has not occurred.

## Description

### BACKGROUND

### Field of the Disclosure

The present disclosure relates to an image sensor device, method and computer program.

### Description of the Related Art

The "background" description provided is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present disclosure.

When images are captured of members of the public without their explicit permission, there is a risk to the privacy of individuals. It is undesirable for identifying information such as a person's face or vehicle licence plate to be recorded without the person's permission, and even if the footage is never distributed or is erased shortly after being recorded, there is still a risk to the person's privacy in the event of a data security breach.

However, it is often still desirable to capture images that include members of the public for various purposes. For example, it may be desirable to use video surveillance to record an area around a private property that is off-limits to the public, but without invading the privacy of people who are behaving lawfully. The use of personal devices such as mobile phones to record video in public for personal use, for example to document a vacation, similarly poses a risk to privacy.

It is an aim of embodiments of this disclosure to address this problem.

### SUMMARY

The present disclosure is defined by the claims.

### BRIEF DESCRIPTION OF THE DRAWINGS

Non-limiting embodiments and advantages of the present disclosure will be best understood by reference to the following detailed description taken in conjunction with the accompanying drawings, wherein:
Figure 1 is a schematic diagram of an image-capturing device 100.
Figure 2 is a schematic diagram of the image sensor device 110.
Figure 3 is a flowchart of a series of processing steps performed by the image sensor device 110.
Figure 4 shows two images, images 410 and 420, output by the image sensor device 110.
Figures 5a)-5c) each show an image output by the image sensor device 110.
Figure 6 shows two images, images 610 and 620, output by the image sensor device 110.
Figures 7 and 8 depict images output by the image sensor device 110 in embodiments.
Figure 9 shows two images, images 901 and 902, output by the image sensor.
Figure 10 is a schematic diagram of an image-capturing system 1000.
Figure 11 is a schematic diagram of an image-capturing system 1100.

Like reference numerals designate identical or corresponding parts throughout the drawings.

### DETAILED DESCRIPTION OF THE EMBODIMENTS

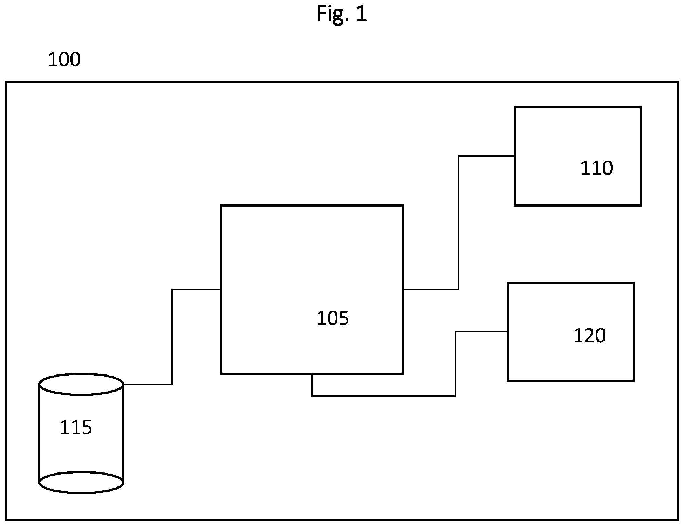

Figure 1 is a schematic diagram of an image-capturing device 100 according to embodiments of the disclosure. The image-capturing device 100 includes an image sensor device 110 configured to capture an image of a real-world scene. In embodiments the image sensor device 110 may be, for example, a complementary metal-oxide-semiconductor (CMOS) active-pixel sensor (APS). However, the disclosure is not limited in this regard and in other embodiments the image sensor device may be any suitable type of image-capturing sensor known in the art.

The image-capturing device 100 further includes communication circuitry 120. The communication circuitry 120 is configured to receive image information output by the sensor device 110 via the processing circuitry 105 and transmit this to another device or system over a network. However, the disclosure is not limited to this and other data may be provided over the network by the communication circuitry 120. The network may be a wired network, or a wireless network. For example, the communication circuitry 120 may allow data to be communicated over a cellular network such as a 5G network, or a Low Earth Orbit Satellite internet network or the like. This network may be a Wide Area Network such as the Internet or may be a Private Network.

The operation of the image-capturing device 100 is, in embodiments, controlled by processing circuitry 105. The processing circuitry 105 may be formed from semiconductor material and may be an Application Specific Integrated Circuit or may operate under the control of software. In other words, the processing circuitry 105 may operate under the control of software instructions stored on storage medium 115. The processing circuitry 105 is thus connected to the sensor device 110 and the communication circuitry 120. Additionally connected to the processing circuitry 105 is the storage 115. The storage 115 may be semiconductor storage or optically or magnetically readable storage. The storage 115 is configured to store software code according to embodiments therein or thereon.

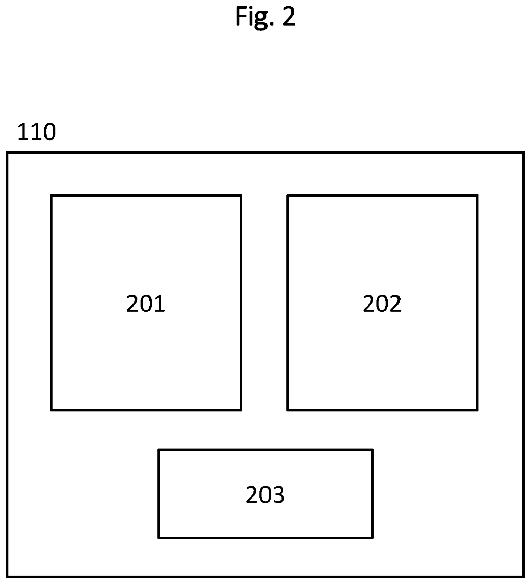

Figure 2 is a schematic diagram of the image sensor device 110. In embodiments, the image sensor device 110 is an IMX500 made by Sony ^{®}. The image sensor device 110 comprises processing circuitry configured to run two neural networks, a first neural network 201 and a second neural network 202, and a receiving unit 203. The receiving unit 203 is configured to receive an image of a real-world scene, and the first neural network 201 and the second neural network 202 are configured to carry out a series of processing steps as described below. Each of the first neural network 201, the second neural network 202 and the receiving unit 203 are implemented using circuitry, for example.

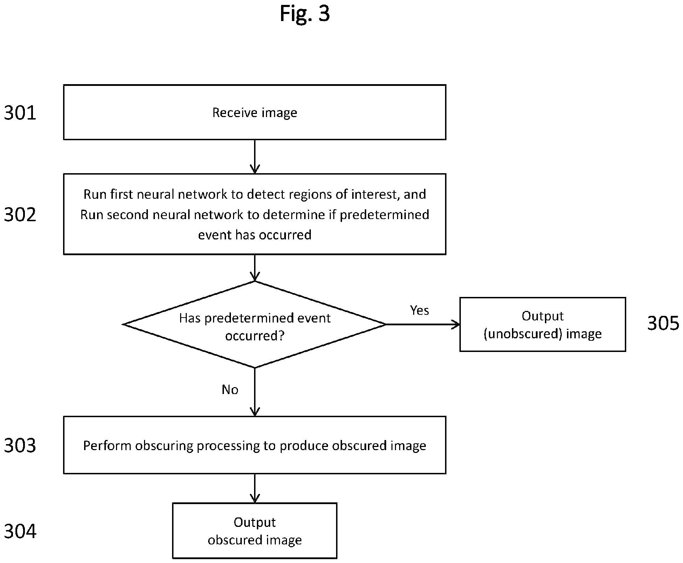

Figure 3 is a flowchart showing a series of processing steps performed by the circuitry of the image sensor device 110 in embodiments. In step 301, the circuitry comprising the receiving unit 203 receives an image of a real-world scene. In step 302, the circuitry is configured to run the first neural network 201. The first neural network 201 is configured to perform processing to detect one or more regions of interest within the image. In some embodiments a region of interest corresponds to a certain object in the image, such as a vehicle licence plate, a person, the face of a person, or the like. The first neural network 201 may detect the certain object in the image by using any suitable object detection technique known in the art. For example, the first neural network 201 may detect the presence of a particular type of object (e.g. the face of a person) using a suitable convolutional neural network (CNN) that has been trained with training data images depicting objects of that type (e.g. faces). The first neural network 201 then defines the region of interest as an area of the image that encompasses the object, such as an area that includes and surrounds the object by a predetermined margin, or an area with a predetermined size and shape that is centred on the object.

However, the disclosure is not limited in this regard and in further embodiments any suitable method may be used to identify a particular area of the image to be a region of interest. For example, in some embodiments the location, shape and/or size of a region of interest in the image may be determined by a user in advance (e.g. a user may determine that a left side of the image comprises a region of interest). This may be achieved by providing the user with the option to determine a region of interest via a display and user interface included in the image-capturing device 100, for example.

In step 302 the circuitry is additionally configured to run the second neural network 202. The second neural network 202 is configured to perform processing to determine if a predetermined event has occurred based on the image in step 302. The predetermined event may be any occurrence in a real-word scene that is identifiable from an image of the scene. For example, the predetermined event may be a person in the image performing a predetermined action, the presence of a particular object in the image, or the like. This is described in more detail below.

The second neural network 202 determines if the predetermined event has occurred by detecting if the image depicts the predetermined event, using any suitable object detection method known in the art, for example. If it is detected that the image depicts the predetermined event, it is determined that the predetermined event has occurred. If it is detected that the image does not depict the predetermined event, it is determined that the predetermined event has not occurred.

The image sensor device 110 may be configured such that the first neural network 201 performs processing to detect the one or more regions of interest and the second neural network 202 performs processing to determine if the predetermined event has occurred approximately simultaneously in step 302. However, in further embodiments the first neural network 201 and the second neural network 202 may begin to perform these respective processing steps at different times, in any order.

In instances when the second neural network 202 does not detect the predetermined event in the image, and therefore determines that the predetermined event has not occurred, in step 303 the circuitry is further configured such that the first neural network 201 initiates obscuring processing on the image to produce an image in which the one or more regions of interest are obscured (hereafter referred to as an obscured image). The obscuring processing may be any suitable type of image processing that can be used to obscure an area of an image, for example processing that blurs, pixelates or blocks out an area of an image. This is described in more detail below.

In some embodiments, the first neural network 201 is configured to perform the obscuring processing on the image itself. However, the disclosure is not limited in this regard and in further embodiments the first neural network 201 is configured to initiate the obscuring processing in any suitable manner such that the obscuring processing is performed on the image by the image sensor device 110. For example, the first neural network 201 may be configured to initiate the obscuring processing by sending a signal to additional processing circuitry included in the image sensor device 110, the signal instructing the additional processing circuitry to perform the obscuring processing.

In some embodiments the second neural network 202 is configured to send a signal to the first neural network 201 indicating that the predetermined event has not occurred, and the first neural network 201 is configured to initiate the obscuring processing on the image in response to receiving the signal. However, the disclosure is not limited in this regard and in further embodiments the image sensor device 110 may be configured in any suitable manner such that the first neural network 201 initiates obscuring processing when the second neural network 202 determines that the predetermined event has not occurred. For example, in some embodiments the first neural network 201 is configured to automatically initiate the obscuring processing if it has received no signal from the second neural network 202 (e.g. a signal indicating that the predetermined event has occurred) within a predetermined time frame (e.g. 10ms) after the receiving unit 203 receives the image. In step 304, the circuitry is configured to output the obscured image.

If the second neural network 202 does detect the predetermined event in the image and therefore determines that the predetermined event has occurred, the circuitry is configured to output the image in step 305. That is, the image sensor device outputs a version of the image received by the receiving unit 203 on which obscuring processing has not been performed to obscure the regions of interest (hereafter referred to as an unobscured image).

For example, in some embodiments the second neural network 202 is configured to send a signal to the first neural network 201 indicating that the predetermined event has occurred, and the first neural network 201 is configured to output the image without initiating the obscuring processing in response to receiving the signal. However, the disclosure is not limited in this regard and in further embodiments the image sensor device 110 may be configured in any suitable manner such that the unobscured image is output when the second neural network 202 determines that the predetermined event has occurred. For example, in some embodiments the first neural network 201 is configured to output the image without initiating the obscuring processing if it has received no signal from the second neural network 202 (e.g. a signal indicating that the predetermined event has not occurred) within a predetermined time frame (e.g. 10ms) after the receiving unit 203 receives the image.

The disclosure is not limited to embodiments in which the first neural network 201 only initiates obscuring processing after it has been determined whether the predetermined event has occurred (as shown in Figure 3). In other embodiments, the first neural network 201 is configured to initiate obscuring processing on the received image before the second neural network 202 finishes determining if the predetermined event has occurred. In these embodiments, the first neural network 201 may duplicate the received image and initiate obscuring processing on the duplicate image data to produce an obscured image, and then output either the original (unobscured) image received or the obscured image depending on the determination result of the second neural network 202. As described above, the image sensor device 110 may be configured to output the obscured image or the unobscured image based on the determination in any suitable manner. In embodiments, the image sensor device 110 is configured to discard the image that was not output. For example, in the event that the second neural network 202 determines that the predetermined event has not occurred and the image sensor device 110 outputs an unobscured image, the image sensor device 110 may be configured to delete the unobscured image.

With an image sensor device 110 according to the present disclosure it is therefore possible to capture images of a real-world scene and immediately obscure areas of the images corresponding to faces, licence plates or the like to ensure the privacy of individuals, but to automatically stop obscuring such areas under certain circumstances. For example, it may be desirable to record personal information about a person such as their face when it is detected that the person is behaving unlawfully (e.g. when capturing images for the purpose of video surveillance). When there is no instance of a person behaving unlawfully, however, it is not desirable for their personal information to be recorded. This is described in more detail below. Furthermore, in the event that the second neural network 202 determines that the predetermined event has not occurred, the image sensor device 110 automatically outputs an unobscured image and does not retain the unobscured image or send it to an external device. This reduces the risk of the unobscured image being accessed in the event of a data security breach.

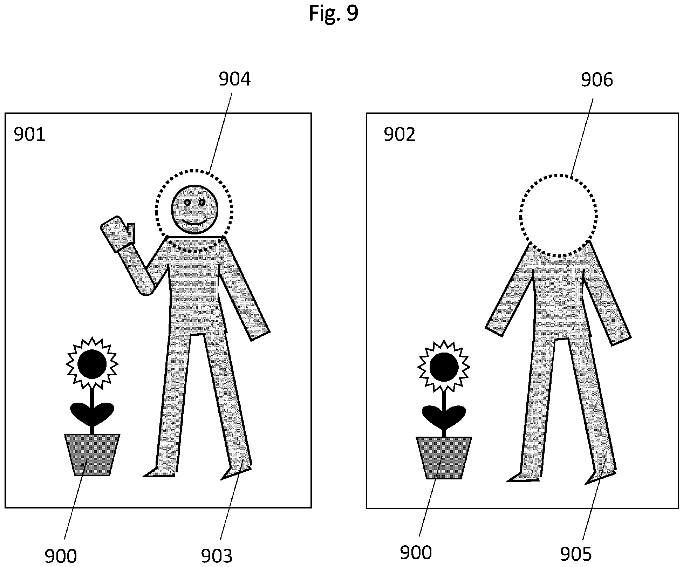

When implemented in a personal device, such as a smart phone, wearable apparatus or drone, the image sensor device 110 can be used to capture images (for example, for photography or recording video) and ensure the privacy of passers-by who have not agreed to be imaged. A person who wishes to be imaged can, however, choose to perform a predetermined action to cause the image sensor device to output an unobscured image that shows their face, for example. This is described in more detail below with reference to Figure 9.

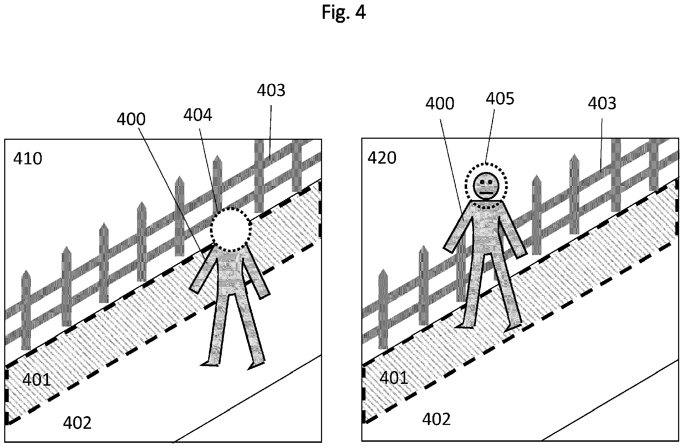

Figure 4 shows two images, images 410 and 420, output by the image sensor device 110. In these embodiments, the image sensor device 110 is being used to capture images for the purpose of video surveillance (for example, when implemented in an image-capturing device 100 that is a security camera). Each image shows a real-world scene in which a person 400 is walking along a path divided into two areas, 401 and 402, alongside a fence 403. Here, the first neural network 201 is configured to detect regions of interest that correspond to a face of a person. In Figure 4 it can be seen that the first neural network 201 has identified a single region of interest that corresponds to the face of the person 400 for each of the images 410 and 420, regions of interest 404 and 405 respectively. Image 410 is an obscured image in which the region of interest 404 is obscured, and so the face of the person is not visible. Image 420 however is an unobscured image in which the region of interest 405 is not obscured and the face of the person is visible.

As described above, the image sensor device 110 is configured to output an obscured image or an unobscured image depending on whether the second neural network 202 determines that a predetermined event has or has not occurred. In embodiments, the predetermined event is a person entering a predetermined area. For example, in embodiments depicted in Figure 4 the predetermined event is a person entering area 401. In these embodiments, area 401 is a real-world area that members of the public are forbidden from entering. For the purpose of video surveillance it is therefore desirable to output unobscured images if it is detected that a person is walking in the forbidden area, in order to record the face of the person behaving unlawfully, but otherwise output images in which the faces of passers-by are obscured.

In embodiments where the predetermined event is a person entering a predetermined area, the second neural network 202 is configured to detect whether an image depicts a person who has entered, or is entering, the predetermined area. This may be achieved by using object detection processing to identify an object in the image as a person, and determine whether the location of the person within the image is associated with an area of the image that corresponds to the predetermined area (hereafter referred to as the event region' of the image).

In embodiments, the second neural network 202 is configured to determine whether the location of the person within the image is associated with the event region of the image based on whether any part of the person overlaps with the event region. In other embodiments, the determination may be based on whether a predetermined proportion of the person's body overlaps with the event region. For example, the second neural network 202 may be configured to determine that a person has entered the predetermined area if 80% of more of their body overlaps with the event region.

However, the disclosure is not limited in this regard and in other embodiments the second neural network 202 may be configured to determine whether the location of the person within the image is associated with the event region in any suitable manner. For example, the determination may be based on whether a certain part of the person (such as their feet) overlaps with the event region. In image 410 for example, the second neural network 202 has determined that person 400 is not in area 401 because their feet are in area 402, even though a large proportion of the person's body overlaps with area 401 when viewed from the perspective from which the image was captured. It was therefore determined that the predetermined event had not occurred, and the output image 410 is therefore an obscured image in which the face of the person 400 is not visible. In image 420, the second neural network 202 has determined that person 400 is in area 401 because their feet are in area 401, even though a large proportion of the person's body does not overlap with area 401 when viewed from the perspective from which the image was captured. It was therefore determined that the predetermined event had occurred, and the output image 420 is therefore an unobscured image in which the face of the person 400 is visible.

The event region of a particular image may be predetermined by the image sensor device 110 in a number of ways. For example, in some embodiments the event region of an initial calibrating image captured by the image sensor device 110 is determined by a user (for example, selected by the user), and the second neural network 202 then determines that, for each further image captured, an equivalent area in each image is the event region. For example, if the user determines the left-hand half of the initial calibrating image to be the event region, when the image sensor device 110 receives a further image the second neural network 202 determines that the left-hand half of the further image is the event region.

A user may be allowed to determine a particular area of the image to be the event region by using a user interface to indicate the location and shape of the area in the image. For example, the image sensor device 110 may transmit an instruction to instruct a display (such as a display included in the device 100) to display the user interface. In embodiments the user may indicate the location and shape of a particular area of the image by any suitable means, for example by drawing over the image to indicate the boundaries of the area (such as by drawing a line enclosing the area, drawing a line partitioning the image such that the area corresponds to a particular part, or the like). In another example, the image sensor device 110 may be configured to define an area of the image with a predetermined shape and size at a location indicated by a user. The user interface may be, for example, a touchscreen interface where the user determines the particular area using touch screen gestures (such as tapping, swiping, or dragging gestures, or the like). The disclosure is not limited in this regard however, and in further embodiments the user interface may take any suitable form that enables the user to identify a particular area of an image.

In further embodiments, the second neural network 202 is configured to perform image processing on an image to identify the event region. For example, in some embodiments the second neural network 202 is configured to use object detection processing to detect a particular object in the image (such as a particular building, vehicle, item of street furniture or the like) and determine that an area of the image associated with the object is the event region. This may be, for example, an area of the image that includes and surrounds the object by a predetermined margin. In other embodiments, this is an area of the image within a predetermined distance from the object. For example, in Figure 4 the event region in each of images 410 and 420 that corresponds to area 401 may be determined by the second neural network 202 by detecting the fence 403 in each image and identifying an area of the image that is within a predetermined number of pixels from the fence. In some embodiments the second neural network 202 is configured to identify the event region using a suitable machine learning model that has been trained to detect an area in an image that has a particular appearance. Images containing different views of the area may be used to train the machine learning model so that the area may be identified by the second neural network 202 from different angles.

However, the present disclosure is not limited in this regard and any suitable image processing technique may be used to identify the region. In further embodiments for example, the second neural network 202 is configured to detect boundaries in the image and identify the event region using the detected boundaries. For example, if a real-world area is surrounded by a fence or other boundary (such as a line drawn on the ground, or a change in colour or texture of the surrounding area) the second neural network 202 may detect the boundary in the image and determine that the event region is the area bounded by or on one side of the boundary. The second neural network 202 may detect boundaries in the image using any suitable image processing method known in the art, for example edge detection techniques such as Canny edge detection.

In some embodiments, the event region in an image is identified by the image sensor device 110 using both image processing and an indication from a user. For example, the second neural network 202 may be configured to perform processing in any manner described above to identify an event region in an initial calibrating image, and then a user is presented with a user interface that allows the user to confirm if the identified event region is desirable. In embodiments, if the user confirms that the identified event region is desirable the image sensor device 110 is configured to perform the same image processing to identify the event region in each further image captured. In other embodiments, however, if the user confirms that the identified event region is desirable the image sensor device 110 is configured to automatically determine that an equivalent area in each further image captured is the event region without performing the same image processing for each further image. If the area that defines the event region is not desirable, the user may be presented with an alternative area identified by the image sensor device 110 and/or presented with the option to identify the event region themselves (using the user interface as described above, for example).

The present disclosure is not limited in this regard however, and in further embodiments the image sensor device 110 is configured to identify the event region in an image using both image processing and an indication from a user in any suitable manner. For example, in some embodiments the image sensor device 110 is configured to detect boundaries in the image as described above, identify a number of different areas within the image that are defined by the boundaries, and present a user interface to a user that allows the user to identify which area is the event region.

In some embodiments where the image sensor device 110 is configured to identify the event region based on the content of the image (for example, using image processing on the image to detect particular objects and/or boundaries), the image sensor device 110 is able to identify the event region in images taken from different angles. This allows the image sensor device 110 to be used in an image-capturing device 100 which is automatically moved in order to capture images of an area of the real-world scene that is wider than the field of view of the device. It also allows the same image sensor device 110 to be used in different image-capturing devices placed at different locations around a real-world scene without the need to re-calibrate the image sensor device 110 to detect a different event region in each captured image. Furthermore, if an image-capturing device 100 housing the image sensor device 110 is accidentally moved or knocked, the image sensor device 110 will still be able to identify the event region in captured images.

In embodiments, the first neural network 201 is configured to initiate obscuring processing to be performed using any suitable technique known in the art that obscures the one or more regions of interest. When a region of interest is obscured, a level of detail in the area within the region is decreased. The obscuring processing can therefore remove sensitive information from an image, if each region of interest in the obscured image no longer includes a level of detail high enough to identify sensitive information (such as facial features or numbers on a licence plate). In some embodiments, the first neural network 201 is configured to perform the obscuring processing itself using a particular technique known in the art. In embodiments where the first neural network 201 instructs additional processing circuitry to perform the obscuring processing, the first neural network 201 may be configured to instruct the additional processing circuitry to perform the obscuring processing using a particular technique known in the art.

For example, obscuring processing may be performed that completely blocks out the region of interest with replacement image content (e.g. an area of solid colour), such that no detail within the region is visible. The region of interest 404 in Figure 4 is completely blocked out, for example, as the entire region has been replaced with an area of solid colour. In another example, the replacement image content is such that it appears as if the region of interest were covered by a partially transparent layer of image content (e.g. as if an additional semitransparent image layer was included comprising an area of solid colour). The obscured image produced does not contain unobscured image data, however, as the original image content of the region of interest is replaced rather than being supplemented with an additional image layer. In further embodiments, the obscuring processing is image processing that blurs or pixelates each region of interest using any suitable technique known in the art such that a level of detail in the image within the region is decreased. The first neural network 201 may be configured to initiate obscuring the entire region of interest, (for example, as the region 404 has been obscured by blocking out the entire region) or obscuring a certain area within the region of interest. For example, in embodiments where a region of interest is defined as an area of the image that includes and surrounds an object by a predetermined margin, the first neural network 201 may only obscure the area within the region of interest that includes the object. This area may be detected using a suitable object detection technique as described above.

In some embodiments, the first neural network 201 is configured to initiate a different type of obscuring processing under different circumstances. For example, the first neural network 201 may determine a type of obscuring processing to be performed based on a determination by the second neural network 202.

In some embodiments, for example, the second neural network 202 additionally determines a distance between a detected person and an event region of the image. This determination may be based on the smallest distance between a section of the event region and a calculated average location of the detected person, the smallest distance between the event region and any part of the person, the smallest distance between the event region and an average location of a specific part of the person (e.g. their feet), or the like. The first neural network 201 then determines a type of obscuring processing to be performed based on the distance between the detected person and the event region.

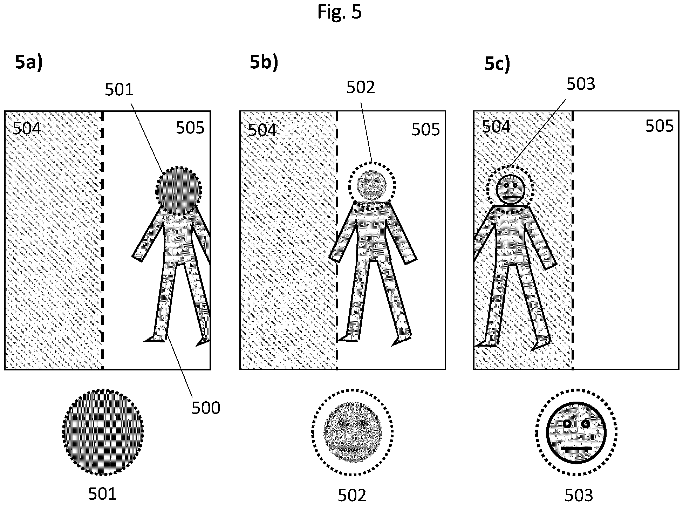

In embodiments, the second neural network 202 determines whether the distance falls within a predetermined threshold distance (e.g. 20 pixels) from the event region. For example, a first or second type of obscuring processing may be performed based on whether the distance is determined to be greater or less than a predetermined threshold distance. Figures 5a)-5c) show embodiments where the type of obscuring processing is determined in this manner. However, in further embodiments the second neural network 202 may compare the calculated distance to multiple threshold distances, and there may be more than two possible types of obscuring processing which may be selected based on the distance.

Each of Figures 5a)-5c) show an image output by the image sensor device 110 in embodiments. Each image shows a person 500 in a real-world scene. For each image, the first neural network 201 has identified a region of interest (regions 501, 502 and 503) corresponding to the face of the person 500. The corresponding region of interest is shown below each image. The real-world scene contains two areas, area 504 and 505, and in these embodiments the predetermined event comprises a person entering the area 504.

The image in Figure 5a) is an obscured image showing the person 500 standing in area 505. The second neural network 202 has determined that the predetermined event has not occurred (that is, the person 500 has not entered area 504). In addition, the second neural network 202 has determined a distance between the person 500 and the event region corresponding to area 504, and determined that this distance is greater than a predetermined threshold distance. As a result, a first type of obscuring processing is performed. In these embodiments the first type of obscuring processing is such that the region of interest 501 is completely blocked out by an area of solid colour. However, in other embodiments the first type of obscuring processing may be any type of obscuring processing.

The image in Figure 5b) is an obscured image showing the person 500 approaching area 504. The second neural network 202 has determined that the predetermined event has not occurred (as the person has not entered the area 504 In addition, the second neural network 202 has determined a distance between the person 500 and the event region corresponding to area 504, and determined that this distance is less than the predetermined threshold distance. As a result, a second type of obscuring processing is performed. In these embodiments, the second type of obscuring processing is such that the region of interest 502 is blurred. However, in other embodiments the second type of obscuring processing may be any type of obscuring processing.

The image in Figure 5c) is an image in which the person 500 has entered the area 504. The second neural network 202 has determined that the predetermined event has occurred and the image sensor device 110 has therefore output an unobscured image. In the unobscured image, the facial features of person 500 are clearly visible within the region of interest 503 as no obscuring processing has been performed on the region.

In embodiments, the first neural network 201 may be configured to initiate obscuring processing to obscure each region of interest by a predetermined amount. The amount by which the obscuring processing obscures each region of interest is herein referred to as the obscurity strength, where a particular obscurity strength is a measure of how much the level of detail in a region of interest is decreased. An obscurity strength of zero may indicate, for example, that the level of detail in the region of interest has not been decreased at all and is identical to the unobscured image.

This may be measured in different ways depending on the type of obscuring processing performed. For example, in embodiments where the obscuring processing blurs each region of interest, processing with a high obscurity strength will produce a lower spatial resolution in each region than processing with a lower obscurity strength. In another example, in embodiments where the obscuring processing pixelates each region of interest, processing with a high obscurity strength will produce a lower pixel count in each region than processing with a lower obscurity strength.

In embodiments, the first neural network 201 is configured to initiate obscuring processing with a particular obscurity strength based on a determination by the second neural network 202, such as a determination of a distance between a detected person and an event region. For example, the obscurity strength may be selected based on whether this distance is determined to be greater or less than one or more predetermined threshold distances, in a similar manner as described above. In another example, the obscurity strength is calculated based on the distance value itself (e.g. having an inversely proportional relationship such that the obscurity strength decreases as the distance increases).

In embodiments, in certain circumstances the image sensor device 110 is configured to output an obscured image even when it is determined the predetermined event has occurred. That is, the image sensor device 110 is configured to output an unobscured image when it is determined that the predetermined event has occurred and another determination result is obtained. The another determination result may be, for example, the determination that a person has moved a certain distance into a real-world area. In these embodiments, the image sensor device 110 may be configured to determine a distance between the person and the edge of event region and begin to output unobscured images when this distance exceeds a predetermined threshold. In further embodiments, the image sensor device 110 is configured to determine a type and/or obscurity strength of obscuring processing based on the distance between a person who has entered the area and the edge of the corresponding event region, in a similar manner as described above. For example, the obscurity strength of the obscuring processing performed on images of a person entering a real world area may be decreased as the person moves further into the area (that is, further from the edge) such that each region of interest becomes less and less obscured. At a certain threshold distance, the image sensor device 110 then begins to output unobscured images.

When it is detected that the predetermined event has occurred, in further embodiments the image sensor device 110 is configured to determine a type and/or obscurity strength of obscuring processing based on a length of time for which it has been previously determined that the predetermined event has occurred. That is, the type and/or obscurity strength may be determined based on a measure of how long the predetermined event had previously been detected at the time of the determination.

For example, once the predetermined event is first detected the obscurity strength may be decreased gradually over time as long as the predetermined event continues. When a person first enters a certain real-world area, for example, each region of interest may be initially blurred with a high obscurity strength, but as the person stays in the area over time, the obscurity strength is decreased such that each region becomes more and more distinct. After a certain threshold time, the image sensor device 110 then begins to output unobscured images.

In these embodiments, the length of time for which it has been previously determined that the predetermined event has occurred may be determined based on a number of images previously received that indicated that the predetermined event had occurred. In embodiments, the image sensor device 110 is configured to record each determination result of the second neural network 202 regarding whether the predetermined event has occurred, and obtain one or more previous determination results to determine a number of previous consecutive results that indicate the predetermined event has occurred. Each determination result may be recorded by the image sensor device 110 by storing the result in the storage medium 115 included in the image-capturing device 100, for example. However, the disclosure is not limited in this regard and in further embodiments the image sensor device 110 may record previous determination results in any suitable manner, for example by sending them to (and retrieving them from) any suitable storage medium in an external device, a remote server or the like.

For example, in some embodiments the image sensor device 110 is configured such that unobscured images are not output until it is determined that the number of previous determination results which indicate that the predetermined event has occurred reaches a certain threshold number. For example, unobscured images are not output until it is determined that the previous five determination results, in addition to the current determination result, indicate that the predetermined event has occurred. The threshold number may be based on the image capture rate of the image sensor device 110.

In further embodiments, the image sensor device 110 is configured to perform obscuring processing with a particular obscurity strength based on one or more previous determination results. For example, the image sensor device 110 may be configured to perform obscuring processing with a predetermined obscurity strength when it retrieves an image, determines that a predetermined event has occurred based on the image, then determines that three previous determination results corresponding to the previous three images captured by the image sensor device 110 also indicate that the predetermined event has occurred.

This ensures the privacy of individuals in a real-world scene is maintained in a scenario when a person briefly enters a forbidden area by accident. It also enables privacy to be maintained if the image sensor device 110 incorrectly determines that a predetermined event has occurred for a brief time. In embodiments where the predetermined event is a person performing a predetermined action, for example, a person in a scene may perform another action that appears to be the predetermined action for a short time. If the image sensor device 110 captures one image every second, and is configured such that unobscured images are not output unless the previous five determination results indicate the predetermined action has been performed, the person's privacy will be maintained as long as they do not appear to be performing the predetermined action for more than five seconds.

A number of examples have been described above in which the first neural network 201 initiates obscuring processing of a particular type and/or obscurity strength in certain circumstances. In further embodiments, the type and/or obscurity strength of the obscuring processing is determined by a user. For example, a user may determine that the obscuring processing should always be processing that blurs each region of interest. In another example, a user may determine that the image sensor device 110 will not output unobscured images until it is determined that the previous ten determination results indicate that the predetermined event has occurred. The user may determine the type and/or obscurity strength of the obscuring processing via any suitable means, such as the use of a user interface provided to the user as described above in relation to determining the event region of an image.

In embodiments where the image sensor device 110 is being used to capture images for the purpose of video surveillance, the image sensor may be configured to send an alert to an external device when it is determined that the predetermined event has occurred. For example, the image sensor device 110 may be configured to automatically send an alert to the police when it is determined that a predetermined event has occurred that comprises a person committing a crime. In another example, when the image sensor device 110 is implemented in a security system comprising an alarm (e.g. an overnight security system in a public building such as a museum) the image sensor device 110 may be configured to automatically send an alert to activate the alarm when it is determined that the predetermined event such as the presence of an intruder has occurred. In embodiments where the image sensor device 110 is implemented in a personal security system (e.g. a home security system imaging the area around a user's home), when it is determined that the predetermined has occurred the image sensor device 110 may be configured to automatically send an alert to a personal device (such as the user's smart phone) indicating that the predetermined has occurred. In some embodiments, the image sensor device 110 is further configured to send the unobscured image to an external device when it is determined that the predetermined event has occurred.

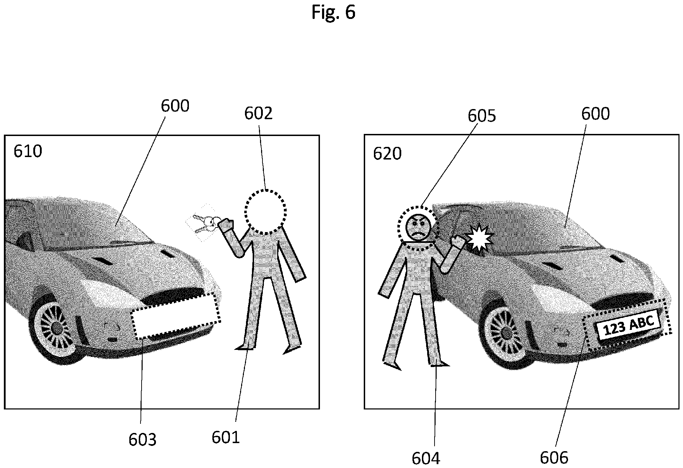

Figures 6-8 show further embodiments in which the image sensor device 110 is used to capture images for the purpose of video surveillance.

Figure 6 shows two images, images 610 and 620, output by the image sensor device 110. Each image shows a real-world scene in which a person is approaching a car 600. In these embodiments, the predetermined event is a person performing a predetermined action, wherein the predetermined action comprises breaking into a vehicle.

The second neural network 202 is configured to detect when a person enters a vehicle unlawfully rather than by unlocking it using keys, for example. The action of entering the vehicle unlawfully may be characterized by breaking, forcing open and/or reaching through a window of the vehicle before opening the door, or the like. In embodiments, the second neural network 202 is trained using training data depicting various acts of people breaking into vehicles in order to configure the neural network to detect the action of entering a vehicle unlawfully. However, the disclosure is not limited in this regard and in further embodiments the second neural network 202 may detect whether the predetermined action is being performed using any suitable technique known in the art. For example, the second neural network 202 may first use a 2D pose estimation technique (such as a suitably trained CNN or the like) to identify a pose of a person in the image and then identify whether the pose is indicative of the predetermined event by comparing it to known poses retrieved from a database.

In embodiments the image sensor device 110 is further configured to receive audio information. The audio information may, for example, correspond to audio recorded at or nearby the real-world scene at approximately the same time the image sensor device 110 captured the image of the scene (e.g. a time within a predetermined period, such as 10 ms, of the exact time the image was captured). In embodiments, the second neural network 202 is configured to determine whether the predetermined event has occurred using the audio information. For example, the second neural network 202 may determine that the predetermined event has occurred (e.g. a person has entered a vehicle unlawfully) if the received audio information comprises a particular sound (e.g. the sound of glass breaking). The particular sound may be identified from the audio information by the second neural network 202 using any suitable audio recognition technique known in the art. In further embodiments, another device may determine whether the audio information comprises a particular sound and send the determination result to the image sensor device 110, and the image sensor device 110 is configured to determine whether the predetermined event has occurred using the determination result.

In image 610, the person 601 approaching the car 600 is the owner of the car. The regions of interest detected for this image, 602 and 603, correspond to the face of person 601 and the licence plate of car 600 respectively. Here, the second neural network 202 has determined that the predetermined event has not occurred. This is because the person 601 is using keys to open the car normally without performing any action that resembles breaking into the vehicle, and therefore the second neural network 202 has not detected that the person 601 is breaking into the car. The image sensor device 110 has therefore output an obscured image in which the regions of interest 602 and 603 are obscured and both the facial features of person 601 and the licence plate number of the car 600 are not visible.

In image 620, the person 604 approaching the car 600 is breaking into the car. Here, the second neural network 202 has determined that the predetermined event has occurred. This is because the person 602 is in the process of breaking the window of the car, and the second neural network 202 has detected that this action comprises entering the car unlawfully. The image sensor device 110 has therefore output an unobscured image in which the regions of interest 605 and 606, corresponding to the face of person 602 and the licence plate of car 600 respectively, are not obscured. Both the facial features of person 602 and the licence plate number of the car 600 are therefore visible in the image 620. In this instance, the image sensor device 110 is configured to send an alert to the owner of the car informing them that the car has been broken into.

The image 620 can therefore be used to identify a criminal (by their facial features) and a car they have stolen (by its licence plate number). For example, in embodiments where the image sensor is further configured to send the unobscured image 620 to the police, the image 620 can be used by the police to identify the criminal. If the image 610 is accessed, however, it cannot be used to identify an innocent member of the public who is simply unlocking their own vehicle.

In further embodiments where the predetermined event is a person performing a predetermined action, the predetermined action may be any action that the second neural network 202 can be configured to detect using suitable techniques known in the art. For example, the predetermined action may be types of illegal activity other than breaking into a vehicle, such as acts of vandalism, causing property damage or the like. The image sensor device 110 may therefore be used for video surveillance when it is desirable to record identifying information about a person behaving unlawfully, but otherwise output images which do not contain identifying information of innocent members of the public.

In various embodiments, there may be instances where it is desirable to retain a record of a person's unobscured facial features at a time preceding the time when the person starts to perform the predetermined action. For example, if a person breaks into a vehicle it may be desirable to obtain unobscured images of the person that were captured immediately preceding the time the person began breaking into the vehicle (e.g. the time when the second neural network 202 first determined the predetermined event had occurred and automatically began outputting unobscured images). For example, in an instance where the face of the person is not visible when they breaking into the vehicle but was visible at a time immediately preceding the crime.

In embodiments, this is achieved by the image sensor device 110 creating a copy of each unobscured image that is received and sending it to an external storage unit (such as the storage medium 115, another storage medium included in the image-capturing device 100, or the like). When the second neural network 202 determines that the predetermined event has occurred, the image sensor device 110 is configured to retrieve a predetermined number of unobscured images from the storage (for example, the previous 5 images) and output them in addition to the most recent unobscured image. However, only a limited number of previous unobscured images must be stored in the storage for privacy to be ensured, or a breach in data security could result in a large number of unobscured images being accessed. This may be achieved by removing an unobscured image from the storage each time a new unobscured image is added, such that only a predetermined number of the most recently added images are stored. For example, in some embodiments the unobscured images are stored in a short-term storage medium such as a circular buffer that replaces previously added data whenever new data is added. In other embodiments, the image sensor device 110 is configured to retrieve and discard a previously added image from the storage whenever a new image is added, or instruct other processing circuitry to do this.

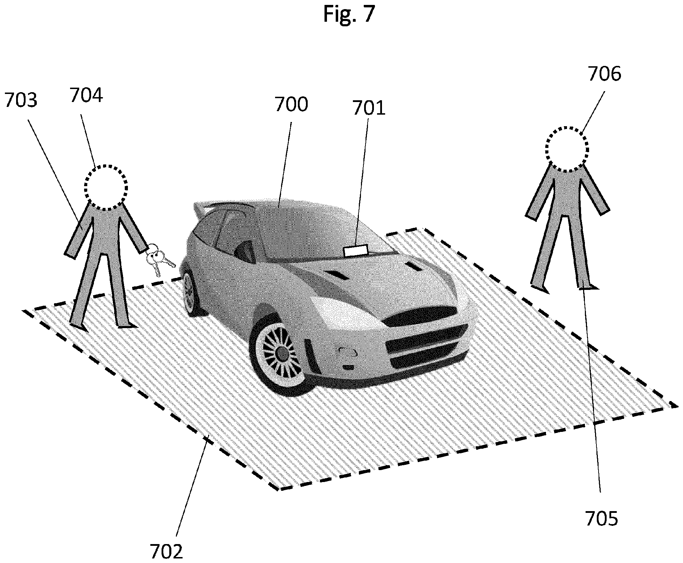

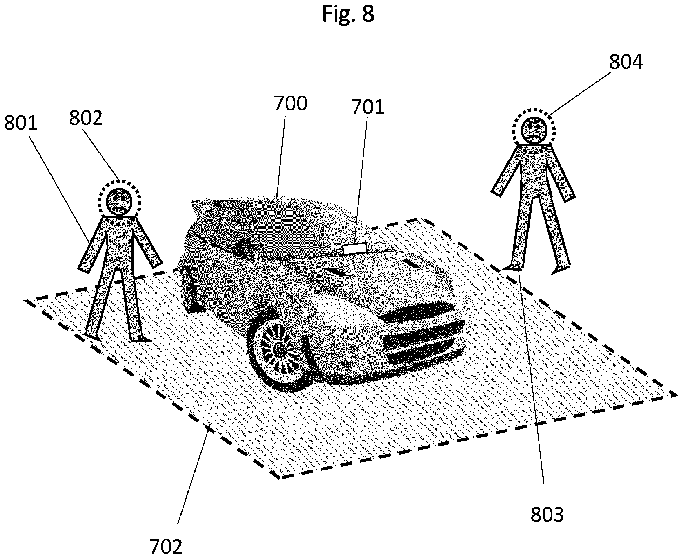

Figures 7 and 8 depict images output by the image sensor device 110 in embodiments. Here, the image sensor device 110 is housed by an image-capturing device 701 that is part of a surveillance system in a car 700 (although in further embodiments, the image-capturing device 701 may be part of a surveillance system in any type of vehicle). The image-capturing device 701 is situated within (or on) the car 700, and may be a separate device that is connected to the car or integrated within an electronic system of the car itself. The image sensor device 110 captures images of a real-world scene comprising the area surrounding the car, which includes the area 702. In these embodiments, the predetermined event is a person performing a predetermined action, wherein the predetermined action comprises entering the area 702.

In embodiments, the image sensor device 110 is configured to output an unobscured image when it is determined that a person has entered the area 702 and further determined that the owner of the car is not near the car. The image sensor device 110 determines whether the owner of the car is near the car based on personal information regarding the owner received by the image sensor device 110. For example, in embodiments the image sensor device 110 is configured to receive the personal information from the device 701, the surveillance system of the car, a user input via a user interface or the like. The personal information may be any information that allows the image sensor device 110 to identify that the owner of the car is approaching the car. For example, the personal information may be data that characterizes an appearance of the owner, such as biometric data that characterizes the face of the owner. The image sensor device 110 is then configured to detect a face of a person in an image and identify whether the face matches the face of the owner, using any suitable facial recognition processing technique known in the art. In embodiments, if it is determined that a face of any person in the image matches the face of the owner it is determined that the owner is near the car. However, in other embodiments it is only determined that the owner is near the car if it is determined that a face of a person in the image who is in the area 702 matches the face of the owner.

In further embodiments the personal information may be determined by the image sensor device 110 itself. For example, the image sensor device 110 may be configured to capture one or more images of the owner of the car when they leave the car and perform processing to identify personal information that characterizes their appearance (such as the appearance of their clothes). The image sensor device 110 is then configured to detect a person in a subsequent image and identify whether the appearance of the person matches the appearance of the owner.

In another example, the personal information may be information that indicates when the car keys are nearby the car. In embodiments, the image sensor device 110 may receive the information from the car keys (for example, via a wireless Bluetooth connection) or from an electronic system within the car itself. In these embodiments, the image sensor device 110 is configured to determine that the owner of the car is nearby if information that indicates when the car keys are nearby has been received by the image sensor device 110 within a predetermined time (for example, the previous five seconds) and that the owner of the car is not nearby if the information is not received within the predetermined time.

The image sensor device 110 may be configured to only receive personal information when the car security system is active, and discard any personal information when the security system is de-activated. This reduces the risk of personal information being accessed by someone who is not the owner of the car when the car security system is not active.

In the image shown in Figure 7, a person 703 is standing within the area 702. A second person, person 705, is nearby but not within the area 702. The first neural network 201 has identified regions of interest 704 and 706 corresponding to the faces of persons 703 and 705 respectively. Here, the second neural network 202 has determined that the predetermined event has occurred, since the person 703 has entered the area 702, but the image sensor device 110 has not output an unobscured image. This is because the image sensor device 110 has further determined that the person 703 is the owner of the car 700 based on the personal information received by the device, by performing facial recognition processing on the face of the person 703 and determining that the face of the person 703 matches the face of the owner. It has therefore been determined that the owner of the car 700 is nearby, and the image sensor device 110 has output an obscured image in which the regions of interest 704 and 706 are obscured. This allows the security system of the car 700 to obscure the facial features of members of the public who pass by near the car but do not approach it (such as person 705), thus maintaining their privacy, in instances where there is no risk that a person is trying to break into the car.

In the image shown in Figure 8, a person 801 is standing within the area 702. A second person, person 803, is nearby but not within the area 702. The first neural network 201 has identified regions of interest 802 and 804 corresponding to the faces of persons 801 and 803 respectively. Here, the second neural network 202 has determined that the predetermined event has occurred, since the person 801 has entered the area 702, and further determined that neither the person 801 nor the person 803 is the owner of the car 700 based on the personal information received by the device. For example, facial recognition processing was performed on the faces of persons 801 and 803 and it was determined that neither face matches the face of the owner. It has therefore been determined that the owner of the car 700 is not nearby, and the image sensor device 110 has output an unobscured image in which the regions of interest 802 and 804 are not obscured. This allows the security system of the car 700 to record the unobscured facial features of all persons near the car in any instance where there is a risk that a person is trying to break into the car. This is particularly desirable in instances where a person approaching a vehicle who is not the owner (such as person 801) intends to break into the vehicle, and a person nearby (such as person 803) is an accomplice in the crime.

In the embodiments depicted in Figures 7 and 8, the image sensor device 110 determines whether an authorized person (the owner of the car) is present based on personal information received that identifies the authorized person. However, the disclosure is not limited in this regard and in other embodiments the image sensor device 110 may be configured in a similar way when implemented in, for example, a video surveillance system. For example, when the image sensor device 110 is included in a home alarm system the image sensor device 110 may be configured to receive personal information that identifies an owner of the house, and configured to output an unobscured image when it is determined that a person has entered an area surrounding the house and further determined that the person is not the owner of the house.

In some embodiments, the image sensor device 110 is implemented in a personal device such a mobile phone, an unmanned aerial vehicle (UAV), a wearable apparatus such as a pair of smart glasses, or the like. Figure 9 shows two images, images 901 and 902, output by the image sensor device 110 in such embodiments. Here, the image sensor device 110 is implemented in a user's mobile phone and is being used to capture images, for example to photograph or record video of a life event. In embodiments where the image sensor device 110 is implemented in a personal device it may be desirable to obscure the faces of any strangers who might appear in the images by accident (for example, in the background of a photo), but not to obscure the face of a person who has agreed to be imaged.

Image 901 shows a real-world scene including an object 900 and a person 903. The first neural network 201 has detected the region of interest 904 corresponding to the face of the person 903. In these embodiments, the person who is controlling the personal device wishes to capture an image of both the object 900 and the person 903, and the person 903 has agreed to be imaged. It is therefore not desirable in this instance to obscure the face of the person 903.

The image sensor device 110 is therefore configured to output an unobscured image when it is determined by the second neural network 202 that a predetermined event has occurred, where the predetermined event is a person performing a predetermined action and the predetermined action is a gesture. As discussed above, the second neural network 202 may detect whether the predetermined action is being performed using any suitable technique known in the art that is used for object identification in images. For example, the second neural network 202 may first use a suitable pose estimation technique to identify a pose of a person in the image, and then identify whether the pose is indicative of the gesture by comparing it to known poses retrieved from a database. The gesture may be any particular pose and/or action that a person may perform, for example a hand gesture such as a wave or holding up a certain number of fingers, an arm gesture such as raising both arms, a particular facial expression, or the like. In some embodiments, the image sensor device 110 is configured to detect more than one type of gesture, and a user may select which gesture is to be the predetermined action.

In embodiments depicted in Figure 9, the gesture is a hand wave. In image 901 the person 903 is performing a hand wave, and the second neural network 202 has determined that the predetermined event has occurred. The image sensor device 110 has therefore output an unobscured image in which the face of the person 903 is visible.

Image 902 shows a real-world scene including the object 900 and a different person 905. The first neural network 201 has detected the region of interest 906 corresponding to the face of the person 905. In these embodiments, the person who is controlling the personal device only wishes to capture an image of the object 900, and the person 905 is included in the image unintentionally. For example, the person 905 is a stranger who has walked into the field of view of the image sensor device 110 by chance, and has not agreed to be imaged. It is therefore desirable in this instance to obscure the face of the person 905 in order to ensure their privacy. In image 902 the person 905 is not performing a hand wave, and so the second neural network 202 has not determined that the predetermined event has occurred. The image sensor device 110 has therefore output an obscured image in which the face of the person 905 is not visible.

It is therefore possible to automatically obscure the faces of any strangers who might appear in images by accident without obscuring the face of a person who has agreed to be imaged. In further embodiments, the image sensor device 110 is configured to output an unobscured image when it is determined that a predetermined event has occurred, where the predetermined event is the presence of a particular person. The particular person may be, for example, the owner of the personal device. The image sensor device 110 is configured to identify whether a person in an image is the particular person based on personal information received regarding the particular person, as described above. For example, the image sensor device 110 may perform facial recognition processing on the face of a person and identify whether it matches the face of the particular person, as described above.

As discussed above, in embodiments a user is allowed to determine certain settings relating to the predetermined event, the obscuring processing or the like. In embodiments where the image sensor device 110 is implemented in a personal device, the user may be provided with a user interface implemented in the personal device in order to determine these settings. For example, in embodiments where the image sensor device 110 is implemented in a smart phone, the owner of the phone may be provided with a user interface that they may interact with using the touch screen of the smart phone (e.g. to provide personal information that characterizes the appearance of the owner, to select a type of obscuring processing to be performed, to select a particular gesture to be the predetermined action, or the like). In some embodiments, the image sensor device 110 is configured such that a user may choose an alternate image-capturing mode in which to use the image sensor device 110. An alternate image-capturing mode may comprise, for example, performing obscuring processing on all images and outputting only obscured images, or not performing obscuring processing on any images and outputting only unobscured images.

In further embodiments, the image sensor device 110 is included in an image-capturing device that forms part of an image-capturing system comprising multiple image-capturing devices.

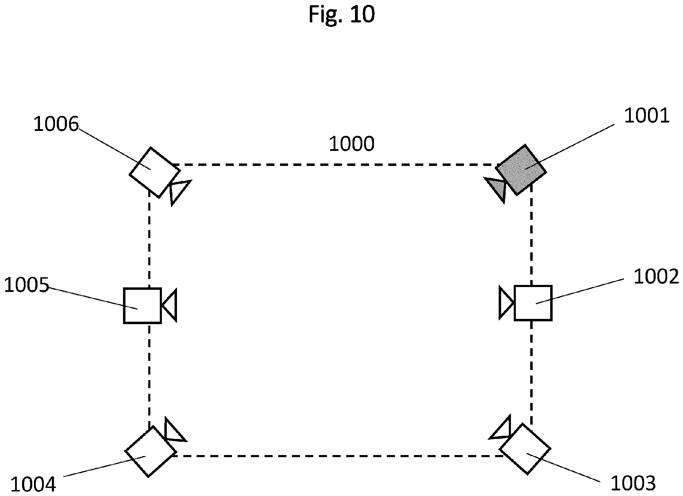

Figure 10 is a schematic diagram of such an image-capturing system 1000. The system 1000 comprises image-capturing devices 1001-1006, each of which are configured to capture images of a real-world scene. In some examples the devices 1001-1006 all capture images of the same real-world scene from different viewpoints, whereas in other examples some or all of the devices 1001-1006 capture images of different real-world scenes.

The devices 1001-1006 are all directly or indirectly connected to each other in any suitable configuration. For example, the devices 1001-1006 may each be directly connected to two other devices in the system (as shown in Figure 10), or may each be connected to a central device (not shown). The devices 1001-1006 may be connected via a wired or wireless connection. Here, device 1001 is an image-capturing device comprising the image sensor device 110 whilst devices 1002-1006 are image-capturing devices comprising other image sensor devices. In embodiments, the other image sensor devices are each configured to capture images, identify one or more regions of interest in each image, and perform obscuring processing to obscure each region of interest. The other image sensor devices are not, however, configured to determine whether a predetermined event has occurred based on the images and output unobscured images when it is determined that the predetermined event has occurred.

In embodiments, the image sensor device 110 is configured to determine whether a predetermined event has occurred based on the images captured by the image-capturing device 1001 as described herein. When it is determined that the predetermined event has occurred, the image sensor device 110 is further configured to send a signal to one or more of the other devices in the system 1000 instructing the other devices to stop performing obscuring processing and output unobscured images.

This allows the image-capturing system 1000 to be used in situations where it is desirable to capture images of an area and normally output obscured images that do not show personal information of individuals in the image (e.g. their facial features) unless a predetermined event occurs. For example, the image-capturing system 1000 may be used for video surveillance of a public area without invading the privacy of people who are behaving lawfully. In particular, the inclusion of a single image sensor device 110 that instructs other image sensor devices to stop obscuring processing allows processing power to be saved, as only one sensor needs to determine whether the predetermined event has occurred.

This also allows a device that is instructed by the device 1001 to begin outputting unobscured images even when the predetermined event is not visible from that device. For example, in instances where the device is capturing images of the real-world scene in which the predetermined event occurs, the predetermined event may be visible from the viewpoint of the device 1001 but not from the viewpoint of the other device. In another instance, a device that is instructed by the device 1001 may be capturing images of a different real-world scene in which the predetermined event did not occur, but is situated nearby. For example, in embodiments here the system 1000 is implemented in a home security system where the devices 1001-1006 each capture images of a different area surrounding a house, all the devices may begin outputting unobscured images in the event that the device 1001 determines that a robbery is occurring in one area. This is desirable in case accomplices are nearby, for example.

In further embodiments, the image sensor device 110 is configured to send a signal to one or more of the other devices in the system 1000 instructing the other devices to begin performing obscuring processing in a particular manner. In some embodiments for example, when it is determined that the predetermined event has occurred, the image sensor device 110 sends a signal to one or more of the other devices in the system 1000 instructing the other devices to perform a particular type of obscuring processing. In another example, the image sensor device 110 sends a signal to one or more of the other devices in the system 1000 instructing the other devices to perform obscuring processing with a particular obscurity strength.

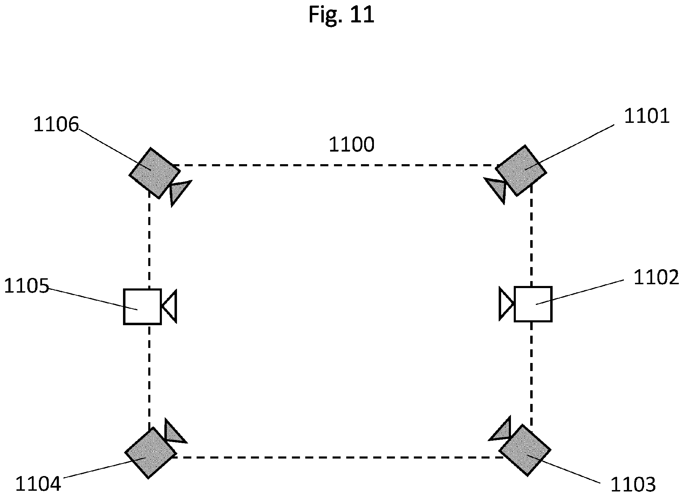

Figure 11 is a schematic diagram of an image-capturing system 1100 comprising image-capturing devices 1101-1106. The system 1100 is similar to the system 1000 in Figure 10, but here multiple image-capturing devices in the system include the image sensor device 110. Specifically, in these embodiments image-capturing devices 1101, 1103, 1104 and 1106 include the image sensor device 110 but image-capturing devices 1102 and 1105 do not. Image-capturing devices 1102 and 1105 each include an image sensor device that is not an image sensor device 110 according to embodiments of the present disclosure. However, the disclosure is not limited in this regard and in further embodiments the system may include any number of image-capturing devices containing the sensor device 110 and image-capturing devices not containing the sensor device 110. In Figure 11, the image sensor device 110 in each of the devices 1101, 1103, 1104 and 1106 is configured to capture images of a real-world scene and determine whether a predetermined event has occurred based on the images captured by the corresponding device.

In embodiments, the image sensor device 110 in each of devices 1101, 1103, 1104 and 1106 is configured to send a signal to one or more of the other devices in the system 1100 instructing the other devices to stop performing obscuring processing and output unobscured images when it is determined, by that image sensor device 110, that the predetermined event has occurred. All the devices in system 1100 will therefore begin to output unobscured images if any of the devices 1101, 1103, 1104 and 1106 capture an image of the predetermined event. This allows a predetermined event to be detected in a greater number of scenarios. For example, if each of the devices 1101, 1103, 1104 and 1106 capture images of a different real-world scene (or capture images of the same real-world scene from different viewpoints), the predetermined event will be detected even if it only occurs on one of the real-world scenes (or is only visible from one viewpoint). In further embodiments, each device in the system may be configured to only stop performing obscuring processing if more than one instructing signal is received from another device. In some embodiments, a first image sensor device 110 is configured to send a signal to one or more of the other devices in the system 1100 that contain an image sensor device 110 instructing the other devices to output an unobscured image only when it is determined that the predetermined event has occurred and another determination result is obtained.

In some embodiments, an image sensor device 110 in a first image-capturing device in either of the systems 1000 or 1100 may be configured to receive an unobscured image from a second image-capturing device in the system. The second image-capturing device may be another device that contains the sensor device 110, or a device that does not. In these embodiments, the image sensor device 110 is configured to determine whether the predetermined event has occurred based on the image captured by the image sensor device 110 and based on the image received from the other image-capturing device. For example, in an embodiment where the first image-capturing device and the second image-capturing device capture images of the same real-world scene from different viewpoints, the image sensor device 110 may be configured to reconstruct a part of the scene in three-dimensional (3D) space. This may be achieved, for example, by determining a position and orientation of an object based on the position and appearance of the object in each image, the focal length of each image-capturing device, and the relative positions of the image-capturing devices around the real-world scene, using any suitable object recognition technique known in the art. For example, in embodiments where the predetermined event is a person performing a predetermined action, a suitable 3D pose estimation technique may be used to determine the pose of a person in the real-world scene based on one or more images of the person captured from different angles. This allows the predetermined action to be determined with greater accuracy, and more reliably distinguished from other actions (e.g. actions that resemble the predetermined action from one angle).

Numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

Embodiments of the disclosure are provided in the following numbered clauses:
1. An image sensor device comprising circuitry configured to:
   receive an image;
   run a first neural network configured to detect one or more regions of interest in the image; and
   run a second neural network configured to determine, based on the image, whether a predetermined event has occurred; wherein
   when it is determined that the predetermined event has occurred, the image is output; and
   the circuitry is further configured such that the first neural network initiates obscuring processing to produce an obscured image in which the one or more regions of interest are obscured and the circuitry is configured to output the obscured image when it is determined that the predetermined event has not occurred.
2. An image sensor device according to clause 1, wherein the predetermined event comprises a person in the image performing a predetermined action.
3. An image sensor device according to clause 2, wherein the predetermined action comprises entering a predetermined area.
4. An image sensor device according to clause 3, wherein the predetermined area is identified using object recognition.
5. An image sensor device according to any of clauses 3-4, wherein the predetermined area is determined by a user.
6. An image sensor device according to any of clauses 2-5, wherein the circuitry is further configured such that the first neural network initiates the obscuring processing to obscure the one or more regions of interest by a predetermined amount, the predetermined amount determined by a distance between the person and the predetermined area.
7. An image sensor device according to any of clauses 3-5, wherein the circuitry is configured to obtain a previous determination result of whether the predetermined event has occurred, and
   the first neural network initiates the obscuring processing to obscure the one or more regions of interest by a predetermined amount, the predetermined amount based on the previous determination result.
8. An image sensor device according to any preceding clause, wherein the circuitry is further configured to send an alert when it is determined that the predetermined event has occurred.
9. An image sensor device according to clause 2, wherein the predetermined action comprises a gesture.
10. An image sensor device according to any of clauses 2-9, wherein the one or more regions of interest comprise a region of interest corresponding to the face of the person in the image performing the predetermined action.
11. An image sensor device according to any preceding clause, wherein the one or more regions of interest comprise a region of interest corresponding to a car licence plate.
12. An image sensor device according to clause 1, wherein the one or more regions of interest comprise a region that corresponds to the face of a person, the circuitry is further configured to perform facial recognition processing to determine if the person is an authorized person, and the predetermined event is the presence of an authorized person.
13. An image sensor device according to any preceding clause, wherein the obscuring processing comprises blurring the one or more regions of interest.
14. An image sensor device according to any preceding clause, wherein
   when it is determined that the predetermined event is depicted, the circuitry is further configured to obtain a previous unobscured image and output the previous unobscured image.
15. An image sensor device according to any preceding clause, wherein the image sensor device is a first image sensor device and the circuitry is further configured to:
   transmit, when it is determined that the predetermined event has occurred, an instruction signal to a second image sensor device,
   the instruction signal instructing the second image sensor device to stop performing obscuring processing.
16. An image sensor device according to any of clauses 1-14, wherein the image sensor device is a first image sensor device and the circuitry is further configured to:
   transmit, when it is determined that the predetermined event has occurred, an instruction signal to a second image sensor device,
   the instruction signal instructing the second image sensor device to perform obscuring processing to obscure the one or more regions of interest by a predetermined amount.
17. An image sensor device according to any of clauses 1-14, wherein the image sensor device is a first image sensor device, the circuitry is further configured to receive a second image from a second image sensor device, and the circuitry is further configured such that the second neural network determines whether the predetermined event has occurred using the second image.
18. A method comprising
   receiving an image;
   running a first neural network configured to detect one or more regions of interest in the image; and
   running a second neural network configured to determine, based on the image, whether a predetermined event has occurred; wherein
   when it is determined that the predetermined event has occurred, the image is output; and
   the first neural network initiates obscuring processing to produce an obscured image in which the one or more regions of interest are obscured and the obscured image is output when it is determined that the predetermined event has not occurred.
19. A computer program comprising computer readable software, which when loaded onto a computer configures the computer to perform a method according to clause 18.

## Claims

1. An image sensor device comprising circuitry configured to:
receive an image;
run a first neural network configured to detect one or more regions of interest in the image; and
run a second neural network configured to determine, based on the image, whether a predetermined event has occurred; wherein
when it is determined that the predetermined event has occurred, the image is output; and
the circuitry is further configured such that the first neural network initiates obscuring processing to produce an obscured image in which the one or more regions of interest are obscured and the circuitry is configured to output the obscured image when it is determined that the predetermined event has not occurred.

2. An image sensor device according to claim 1, wherein the predetermined event comprises a person in the image performing a predetermined action.

3. An image sensor device according to claim 2, wherein the predetermined action comprises entering a predetermined area.

4. An image sensor device according to claim 3, wherein the predetermined area is identified using object recognition.

5. An image sensor device according to claim 3, wherein the predetermined area is determined by a user.

6. An image sensor device according to claim 2, wherein the circuitry is further configured such that the first neural network initiates the obscuring processing to obscure the one or more regions of interest by a predetermined amount, the predetermined amount determined by a distance between the person and the predetermined area.

7. An image sensor device according to claim 3, wherein the circuitry is configured to obtain a previous determination result of whether the predetermined event has occurred, and
the first neural network initiates the obscuring processing to obscure the one or more regions of interest by a predetermined amount, the predetermined amount based on the previous determination result.

8. An image sensor device according to claim 1, wherein the circuitry is further configured to send an alert when it is determined that the predetermined event has occurred.

9. An image sensor device according to claim 2, wherein the predetermined action comprises a gesture.

10. An image sensor device according to claim 2, wherein the one or more regions of interest comprise a region of interest corresponding to the face of the person in the image performing the predetermined action.

11. An image sensor device according to claim 1, wherein the one or more regions of interest comprise a region that corresponds to the face of a person, the circuitry is further configured to perform facial recognition processing to determine if the person is an authorized person, and the predetermined event is the presence of an authorized person.

12. An image sensor device according to claim 1, wherein the obscuring processing comprises blurring the one or more regions of interest.

13. An image sensor device according to claim 1, wherein
when it is determined that the predetermined event is depicted, the circuitry is further configured to obtain a previous unobscured image and output the previous unobscured image.

14. A method comprising:
receiving an image;
running a first neural network configured to detect one or more regions of interest in the image; and
running a second neural network configured to determine, based on the image, whether a predetermined event has occurred; wherein
when it is determined that the predetermined event has occurred, the image is output; and
the first neural network initiates obscuring processing to produce an obscured image in which the one or more regions of interest are obscured and the obscured image is output when it is determined that the predetermined event has not occurred.

15. A computer program comprising computer readable software, which when loaded onto a computer configures the computer to perform a method according to claim 14.
